(19) Europäisches Patentamt / European Patent Office / Office européen des brevets

(11) **EP 2 798 383 B1**

(12) **FASCICULE DE BREVET EUROPEEN**


(45) Date de publication et mention de la délivrance du brevet:
**23.08.2023 Bulletin 2023/34**

(21) Numéro de dépôt: **12819118.6**

(22) Date de dépôt: **27.12.2012**

(51) Classification Internationale des Brevets (IPC):
***G02B 1/11*** *(2015.01)* ***G02B 1/10*** *(2015.01)*
***G02B 1/18*** *(2015.01)* ***G02B 1/16*** *(2015.01)*
***G02B 1/14*** *(2015.01)* ***G02B 1/111*** *(2015.01)*
***G02B 1/115*** *(2015.01)* *G02C 7/02 (2006.01)*
*C03C 17/38 (2006.01)*

(52) Classification Coopérative des Brevets (CPC):
**G02B 1/115; C03C 17/38; G02B 1/111; G02B 1/14; G02B 1/16; G02B 1/18;** C03C 2217/734; C03C 2217/948; G02C 7/02

(86) Numéro de dépôt international:
**PCT/FR2012/053092**

(87) Numéro de publication internationale:
**WO 2013/098531 (04.07.2013 Gazette 2013/27)**


(54) **ARTICLE REVETU D’UN REVETEMENT INTERFERENTIEL AYANT DES PROPRIETES STABLES DANS LE TEMPS**

MIT EINER INTERFERENZBESCHICHTUNG BESCHICHTETER GEGENSTAND MIT LANGZEITSTABILITÄT

ARTICLE COATED WITH AN INTERFERENCE COATING HAVING PROPERTIES THAT ARE STABLE OVER TIME


(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2011 FR 1162492**

(43) Date de publication de la demande:
**05.11.2014 Bulletin 2014/45**



(73) Titulaires:
- **Corporation de L’Ecole Polytechnique de Montreal**
  **Montréal, Québec H3T 1J4 (CA)**
- **Essilor International**
  **94220 Charenton-le-Pont (FR)**

(72) Inventeurs:
- **MARTINU, Ludvik**
  **Montreal, Québec H3W 284 (CA)**
- **SAPIEHA, Jolanta**
  **Pointe Claire, Québec H9R 3P8 (CA)**
- **ZABEIDA, Oleg**
  **Cote Saint Luc, Québec H4V 2G9 (CA)**
- **CHIAROTTO, Sébastien**
  **F-94200 Charenton Le Pont (FR)**
- **SCHERER, Karin**
  **F-94200 Charenton Le Pont (FR)**

(74) Mandataire: **Jacobacci Coralis Harle**
**32, rue de l’Arcade**
**75008 Paris (FR)**



(56) Documents cités:
**EP-A2- 0 588 087** **WO-A1-2010/109154**
**US-A- 5 679 413** **US-A1- 2004 157 061**
**US-A1- 2007 059 942** **US-A1- 2008 020 319**



Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne d'une manière générale un article, de préférence un article d'optique, notamment une lentille ophtalmique, possédant un revêtement interférentiel, de préférence un revêtement antireflet, dont les propriétés optiques sont stables dans le temps, et qui possède en outre des propriétés thermomécaniques améliorées, ainsi qu'un procédé de préparation d'un tel article.

Il est connu de traiter les verres ophtalmiques, qu'ils soient minéraux ou organiques, de façon à empêcher la formation de reflets parasites gênants pour le porteur de la lentille et ses interlocuteurs. La lentille est alors pourvue d'un revêtement antireflet mono- ou multicouche, généralement en matière minérale.

Lors de la préparation d'un revêtement antireflet, des performances cibles sont généralement choisies, qui sont l'efficacité du revêtement antireflet définie par les coefficients de réflexion $R_m$ et $R_v$, et sa couleur de reflet résiduelle, essentiellement caractérisée par l'angle de teinte h et la chroma C*. Ces deux derniers paramètres garantissent le côté esthétique du traitement antireflet pour le porteur et son entourage.

Or, les propriétés optiques des couches du revêtement antireflet, et plus généralement les propriétés optiques des couches des revêtements interférentiels, en particulier celles des couches de silice, évoluent dans le temps, si bien que ses caractéristiques d'efficacité mais surtout d'esthétique peuvent différer entre le moment où le revêtement est formé sur l'article et le moment où celui-ci est vendu, si le verre a été conservé en stock, et/ou pendant l'utilisation de l'article par le porteur, postérieurement à la vente.

Un moyen pour résoudre le premier problème consiste à estimer l'évolution dans le temps du revêtement antireflet et produire un revêtement antireflet différent de celui souhaité mais qui va évoluer dans le temps vers les valeurs cibles, pendant son stockage.

Cependant, l'évolution dans le temps étant empirique et pas toujours modélisable, le problème de vendre des lentilles traitées avec des revêtements antireflet ayant les performances cibles demeure.

Par ailleurs, pour les verres de prescription, vendus au porteur dans les jours suivants leur fabrication, le problème de la modification des propriétés optiques lors de l'utilisation par le porteur est toujours à résoudre.

Il est donc souhaitable de concevoir de nouveaux revêtements interférentiels, en particulier antireflet, qui seraient moins sensibles à l'évolution dans le temps de leurs propriétés optiques, tout en conservant sensiblement ou en améliorant les autres propriétés du revêtement interférentiel, tels que les propriétés mécaniques, l'adhérence.

Selon l'invention, le problème est résolu en déposant comme couche intermédiaire du revêtement interférentiel une couche de bas indice de réfraction formée par dépôt sous faisceau d'ions, d'une couche obtenue exclusivement à partir de matériaux précurseurs de nature organique et sous forme gazeuse.

Le brevet US 6,919,134 décrit un article d'optique comportant un revêtement antireflet comprenant au moins une couche dite "hybride" obtenue par co-évaporation d'un composé organique et d'un composé inorganique, qui lui confère une meilleure adhésion, une meilleure résistance thermique et une meilleure résistance à l'abrasion. Le revêtement antireflet comprend de préférence deux couches "hybrides" en position interne et externe. Ces couches sont généralement déposées par co-évaporation sous assistance ionique typiquement de silice et d'une huile de silicone modifiée.

La demande JP 2007-078780 décrit un verre de lunettes comportant un revêtement antireflet multicouche, dont la couche externe est une couche de bas indice de réfraction dite "organique". Cette couche est déposée par voie liquide (par centrifugation ou trempage), alors que les couches inorganiques du revêtement antireflet sont déposées par dépôt sous vide sous assistance ionique. La demande de brevet indique qu'un tel empilement antireflet possède une meilleure résistance thermique qu'un revêtement antireflet composé exclusivement de couches inorganiques. Ladite couche "organique" comprend de préférence un mélange de particules de silice et d'un liant organosilane tel que le γ-glycidoxypropyltriméthoxysilane.

La demande JP 05-323103 décrit l'incorporation d'un composé organique fluoré dans la dernière couche d'un empilement optique multicouche, comprenant des couches de $SiO_2$ et de $TiO_2$, en vue de la rendre hydrophobe et ainsi minimiser le changement de ses caractéristiques optiques provoqué par l'absorption d'eau. La couche fluorée est obtenue par dépôt en phase vapeur du matériau constitutif de la couche dans une atmosphère composée du précurseur fluoré, qui peut être le tétrafluoroéthylène ou un fluoroalkyl silane.

La demande US 2004/157061 décrit un article comprenant un substrat comportant un revêtement antireflet dont la couche externe est une couche de bas indice de réfraction comprenant du $SiO_2$ et des éléments de bas indice de réfraction tels que des atomes de fluor, des groupes alkyle ou des groupes fluoroalkyle.

La demande US 2007/059942 décrit un substrat revêtu d'un revêtement antireflet multicouche, comprenant des couches de SiOx et TiOx avec $x \leq 2$, dont la couche externe est une couche de TiOx, formées par plasma-CVD via un plasma de radicaux libres. Les couches de SiOx sont formées à partir de précurseurs gazeux tels que l'hexaméthyldisiloxane.

La demande WO 2010/109154 concerne un article d'optique à propriétés antistatiques et antireflet ou réfléchissantes, comprenant un substrat ayant au moins une surface principale revêtue d'un revêtement antireflet ou réfléchissant obtenu à partir de composés précurseurs inorganiques, ledit revêtement comprenant au moins une couche électriquement conductrice comprenant au moins 30% % en masse d'oxyde d'étain.

L'objectif principal de l'invention est la préparation de revêtements interférentiels, en particulier antireflet, dont les propriétés optiques, en particulier la chroma (les porteurs étant plus sensibles à ce paramètre), sont plus stables dans le temps que les revêtements interférentiels connus. De tels revêtements interférentiels possèderaient les caractéristiques cibles dès la fin du dépôt des différentes couches de l'empilement, ce qui permettrait de garantir leur performance et simplifier le contrôle qualité. Ce problème technique n'est pas abordé dans les brevets ou demande de brevet précédemment cités.

Par ailleurs, lors du taillage et du montage d'un verre chez l'opticien, le verre subit des déformations mécaniques qui peuvent provoquer des fissures dans les revêtements interférentiels minéraux, en particulier lorsque l'opération n'est pas conduite avec soin. De façon similaire, des sollicitations en température (chauffage de la monture) peuvent provoquer des fissures dans le revêtement interférentiel. Selon le nombre et la taille des fissures, celles-ci peuvent gêner la vue pour le porteur et empêcher la commercialisation du verre.

Ainsi, un autre objectif de l'invention est l'obtention de revêtements interférentiels ayant des propriétés thermomécaniques améliorées, tout en conservant de bonnes propriétés d'adhérence. L'invention vise en particulier des articles possédant une température critique améliorée, c'est à dire, présentant une bonne résistance à la craquelure lorsqu'ils sont soumis à une élévation de température.

Un autre objectif de l'invention est de disposer d'un procédé de fabrication d'un revêtement interférentiel simple, facile à mettre en oeuvre et reproductible.

Les inventeurs ont découvert qu'une modification de la nature de la couche externe du revêtement interférentiel, qui est généralement une couche de bas indice de réfraction, typiquement une couche de silice, permettait de remplir les objectifs fixés. Selon l'invention, cette couche est formée par dépôt sous un faisceau d'ions, d'espèces activées, sous forme gazeuse, obtenues exclusivement à partir de matériaux précurseurs de nature organique.

Les buts fixés sont donc atteints selon l'invention par un article comprenant un substrat ayant au moins une surface principale revêtue d'un revêtement interférentiel multicouche, ledit revêtement comprenant une couche A ayant un indice de réfraction inférieur ou égal à 1,55, qui constitue une couche intermédiaire, directement en contact avec la couche externe du revêtement interférentiel, cette couche externe du revêtement interférentiel étant dans ce second cas une couche B ayant un indice de réfraction inférieur ou égal à 1,55, et ladite couche A a été obtenue par dépôt, sous faisceau d'ions, d'espèces activées issues d'au moins un composé C, sous forme gazeuse contenant dans sa structure au moins un atome de silicium, au moins un atome de carbone, au moins un atome d'hydrogène et, optionnellement au moins un atome d'azote et/ou au moins un atome d'oxygène, le dépôt de la dite couche A s'effectuant en réalisant un bombardement au moyen d'un faisceau d'ions de la couche A au cours de sa formation, et en présence d'azote et/ou d'oxygène lorsque le composé A ne contient pas d'azote et/ou d'oxygène; et la couche A n'ayant pas été formée à partir de composés précurseurs inorganiques.

L'invention concerne également un procédé de fabrication d'un tel article, comprenant au moins les étapes suivantes :

- fournir un article comprenant un substrat ayant au moins une surface principale,
- déposer sur ladite surface principale du substrat un revêtement interférentiel multicouche, ledit revêtement comprenant une couche A ayant un indice de réfraction inférieur ou égal à 1,55, qui constitue une couche intermédiaire, directement en contact avec la couche externe du revêtement interférentiel, cette couche externe du revêtement interférentiel étant une couche B ayant un indice de réfraction inférieur ou égal à 1,55,
- récupérer un article comprenant un substrat ayant une surface principale revêtue dudit revêtement interférentiel qui comporte ladite couche A, celle-ci ayant été obtenue par dépôt, sous faisceau d'ions, d'espèces activées issues d'au moins un composé C, sous forme gazeuse contenant dans sa structure au moins un atome de silicium, au moins un atome de carbone, au moins un atome d'hydrogène et, optionnellement au moins un atome d'azote et/ou au moins un atome d'oxygène, le dépôt de la dite couche A s'effectuant en réalisant un bombardement au moyen d'un faisceau d'ions de la couche A au cours de sa formation, et en présence d'azote et/ou d'oxygène lorsque le composé A ne contient pas d'azote et/ou d'oxygène, la couche A n'étant pas formée à partir de composés précurseurs inorganiques.

L'invention sera décrite plus en détail en référence au dessin annexé, dans lequel la figure 1 est une représentation schématique de la déformation subie par le verre et de la façon dont est mesurée cette déformation D au cours du test de résistance à la courbure décrit en partie expérimentale.

Dans la présente demande, lorsqu'un article comprend un ou plusieurs revêtements à sa surface, l'expression "déposer une couche ou un revêtement sur l'article" signifie qu'une couche ou un revêtement est déposé sur la surface à découvert (exposée) du revêtement externe de l'article, c'est-à-dire son revêtement le plus éloigné du substrat.

Un revêtement qui est "sur" un substrat ou qui a été déposé "sur" un substrat est défini comme un revêtement

qui (i) est positionné au-dessus du substrat, (ii) n'est pas nécessairement en contact avec le substrat, c'est-à-dire qu'un ou plusieurs revêtements intermédiaires peuvent être disposés entre le substrat et le revêtement en question, et (iii) ne recouvre pas nécessairement le substrat complètement (bien que préférentiellement, il le recouvre). Lorsque "une couche 1 est localisée sous une couche 2", on comprendra que la couche 2 est plus éloignée du substrat que la couche 1.

L'article préparé selon l'invention comprend un substrat, de préférence transparent, ayant des faces principales avant et arrière, l'une au moins desdites faces principales comportant un revêtement interférentiel, de préférence les deux faces principales.

Par face arrière (généralement concave) du substrat, on entend la face qui, lors de l'utilisation de l'article, est la plus proche de l'oeil du porteur. Inversement, par face avant (généralement convexe) du substrat, on entend la face qui, lors de l'utilisation de l'article, est la plus éloignée de l'œil du porteur.

Bien que l'article selon l'invention puisse être un article quelconque, tel qu'un écran, un vitrage, des lunettes de protection utilisables notamment en environnement de travail,ou un miroir, il est de préférence un article d'optique, mieux une lentille optique, et encore mieux une lentille ophtalmique, pour lunettes, ou une ébauche de lentille optique ou ophtalmique telle qu'une lentille optique semi-finie, en particulier un verre de lunettes. La lentille peut être une lentille polarisée, colorée ou une lentille photochrome. Préférentiellement, la lentille ophtalmique selon l'invention présente une transmission élevée.

Le revêtement interférentiel selon l'invention peut être formé sur au moins l'une des faces principales d'un substrat nu, c'est-à-dire non revêtu, ou sur au moins l'une des faces principales d'un substrat déjà revêtu d'un ou plusieurs revêtements fonctionnels.

Le substrat de l'article selon l'invention est de préférence un verre organique, par exemple en matière plastique thermoplastique ou thermodurcissable. Ce substrat peut être choisi parmi les substrats cités dans la demande WO 2008/062142, par exemple un substrat obtenu par (co)polymérisation du bis allyl carbonate du diéthylèneglycol, un substrat en poly(thio)uréthane ou un substrat en polycarbonate de bis(phénol A) (thermoplastique) PC.

Avant le dépôt du revêtement interférentiel sur le substrat éventuellement revêtu, par exemple d'un revêtement anti-abrasion et/ou anti-rayures, il est courant de soumettre la surface dudit substrat, éventuellement revêtue, à un traitement d'activation physique ou chimique, destiné à augmenter l'adhésion du revêtement interférentiel. Ce prétraitement est généralement conduit sous vide. Il peut s'agir d'un bombardement avec des espèces énergétiques et/ou réactives, par exemple un faisceau d'ions ("Ion Pre-Cleaning" ou "IPC") ou un faisceau d'électrons, d'un traitement par décharge corona, par effluvage, d'un traitement UV, ou d'un traitement par plasma sous vide, généralement un plasma d'oxygène ou d'argon. Il peut également s'agir d'un traitement de surface acide ou basique et/ou par solvants (eau ou solvant organique). Plusieurs de ces traitements peuvent être combinés. Grâce à ces traitements de nettoyage, la propreté et la réactivité de la surface du substrat sont optimisées.

Par espèces énergétiques (et/ou réactives), on entend notamment des espèces ioniques ayant une énergie allant de 1 à 300 eV, préférentiellement de 1 à 150 eV, mieux de 10 à 150 eV, et mieux encore de 40 à 150 eV. Les espèces énergétiques peuvent être des espèces chimiques telles que des ions, des radicaux, ou des espèces telles que des photons ou des électrons.

Le prétraitement préféré de la surface du substrat est un traitement par bombardement ionique, effectué au moyen d'un canon à ions, les ions étant des particules constituées d'atomes de gaz dont on a extrait un ou plusieurs électron(s). On utilise de préférence en tant que gaz ionisé l'argon (ions $Ar^+$), mais également l'oxygène, ou leurs mélanges, sous une tension d'accélération allant généralement de 50 à 200 V, une densité de courant généralement comprise entre 10 et 100 $\mu A/cm^2$ sur la surface activée, et généralement sous une pression résiduelle dans l'enceinte à vide pouvant varier de $8.10^{-5}$ mbar à $2.10^{-4}$ mbar.

L'article selon l'invention comporte un revêtement interférentiel, formé de préférence sur un revêtement anti-abrasion. Les revêtements anti-abrasion préférés sont des revêtements à base d'hydrolysats d'époxysilane comportant au moins deux groupements hydrolysables, de préférence au moins trois liés à l'atome de silicium.

Les groupements hydrolysables préférés sont des groupements alkoxysilane.

Le revêtement interférentiel peut être tout revêtement interférentiel classiquement utilisé dans le domaine de l'optique, en particulier de l'optique ophtalmique, excepté le fait qu'il comporte une couche A formée par dépôt, sous un faisceau d'ions d'espèces activées issues d'un dérivé organique du silicium, sous forme gazeuse. Le revêtement interférentiel peut être, sans limitation, un revêtement antireflet, un revêtement réfléchissant (miroir), un filtre infrarouge ou un filtre ultraviolet, de préférence un revêtement antireflet.

Un revêtement antireflet se définit comme un revêtement, déposé à la surface d'un article, qui améliore les propriétés anti-réfléchissantes de l'article final. Il permet de réduire la réflexion de la lumière à l'interface article-air sur une portion relativement large du spectre visible.

Comme cela est bien connu, les revêtements interférentiels, de préférence les revêtements antireflet, comprennent classiquement un empilement monocouche ou multicouche de matériaux diélectriques. Ce sont de préférence des revêtements multicouche, comprenant des couches de haut indice de réfraction (HI) et des couches de bas indice de réfraction (BI).

Dans la présente demande, une couche du revêtement interférentiel est dite couche de haut indice de réfraction lorsque son indice de réfraction est supérieur à 1,55, de préférence supérieur ou égal à 1,6, mieux supérieur ou égal à 1,8 et encore mieux supérieur ou égal à 2,0. Une couche d'un revêtement interférentiel est dite couche de bas indice de réfraction lorsque son indice de réfraction est inférieur ou égal à 1,55, de préférence inférieur ou égal à 1,50, mieux inférieur ou égal à 1,45. Sauf indication contraire, les indices de réfraction auxquels il est fait référence dans la présente invention sont exprimés à 25 °C pour une longueur d'onde de 630 nm.

Les couches HI sont des couches de haut indice de réfraction classiques, bien connues dans la technique. Elles comprennent généralement un ou plusieurs oxydes minéraux tels que, sans limitation, la zircone ($ZrO_2$), l'oxyde de titane ($TiO_2$), le pentoxyde de tantale ($Ta_2O_5$), l'oxyde de néodyme ($Nd_2O_5$), l'oxyde d'hafnium ($HfO_2$), l'oxyde de praséodyme ($Pr_2O_3$), le titanate de praséodyme ($PrTiO_3$), $La_2O_3$, $Nb_2O_5$, $Y_2O_3$, l'oxyde d'indium $In_2O_3$, ou l'oxyde d'étain $SnO_2$. Les matériaux préférés sont $TiO_2$, $Ta_2O_5$, PrTiOs, $ZrO_2$, $SnO_2$, $In_2O_3$ et leurs mélanges.

Les couches BI sont également bien connues et peuvent comprendre, sans limitation, $SiO_2$, $MgF_2$, $ZrF_4$, de l'alumine ($Al_2O_3$) en faible proportion, $AlF_3$, et leurs mélanges, de préférence $SiO_2$. On peut également utiliser des couches SiOF ($SiO_2$ dopée au fluor). Idéalement, le revêtement interférentiel de l'invention ne comprend aucune couche comprenant un mélange de silice et d'alumine.

Généralement, les couches HI ont une épaisseur physique variant de 10 à 120 nm, et les couches BI ont une épaisseur physique variant de 10 à 100 nm.

Préférentiellement, l'épaisseur totale du revêtement interférentiel est inférieure à 1 micromètre, mieux inférieure ou égale à 800 nm et mieux encore inférieure ou égale à 500 nm. L'épaisseur totale du revêtement interférentiel est généralement supérieure à 100 nm, de préférence supérieure à 150 nm.

De préférence encore, le revêtement interférentiel, qui est de préférence un revêtement antireflet, comprend au moins deux couches de bas indice de réfraction (BI) et au moins deux couches de haut indice de réfraction (HI). Préférentiellement, le nombre total de couches du revêtement interférentiel est inférieur ou égal à 8, mieux inférieur ou égal à 6.

Il n'est pas nécessaire que les couches HI et BI soient alternées dans le revêtement interférentiel, bien qu'elles puissent l'être selon un mode de réalisation de l'invention. Deux couches HI (ou plus) peuvent être déposées l'une sur l'autre, tout comme deux couches BI (ou plus) peuvent être déposées l'une sur l'autre.

Selon un mode de réalisation de l'invention, le revêtement interférentiel comprend une sous-couche. Elle constitue dans ce cas généralement la première couche de ce revêtement interférentiel dans l'ordre de dépôt des couches, c'est-à-dire la couche du revêtement interférentiel qui est au contact du revêtement sous-jacent (qui est généralement un revêtement anti-abrasion et/ou anti-rayures) ou du substrat, lorsque le revêtement interférentiel est directement déposé sur le substrat.

Par sous-couche du revêtement interférentiel, on entend un revêtement d'épaisseur relativement importante, utilisé dans le but d'améliorer la résistance à l'abrasion et/ou aux rayures dudit revêtement et/ou de promouvoir son adhésion au substrat ou au revêtement sous-jacent. La sous-couche selon l'invention peut être choisie parmi les sous-couches décrites dans la demande WO 2010/109154.

Préférentiellement, la sous-couche a une épaisseur de 100 à 200 nm. Elle est préférentiellement de nature exclusivement minérale et est préférentiellement constituée de silice $SiO_2$.

L'article de l'invention peut être rendu antistatique grâce à l'incorporation, dans le revêtement interférentiel, d'au moins une couche électriquement conductrice. Par "antistatique", on entend la propriété de ne pas retenir et/ou développer une charge électrostatique appréciable. Un article est généralement considéré comme ayant des propriétés antistatiques acceptables lorsqu'il n'attire et ne fixe pas la poussière et les petites particules après que l'une de ses surfaces a été frottée au moyen d'un chiffon approprié.

La couche électriquement conductrice peut être localisée à différents endroits du revêtement interférentiel, pourvu que ses propriétés anti-réfléchissantes ne soient pas perturbées. Elle peut par exemple être déposée sur la sous-couche du revêtement interférentiel, si elle est présente. Elle est de préférence localisée entre deux couches diélectriques du revêtement interférentiel, et/ou sous une couche de bas indice de réfraction du revêtement interférentiel.

La couche électriquement conductrice doit être suffisamment fine pour ne pas altérer la transparence du revêtement interférentiel. Généralement, son épaisseur varie de 0,1 à 150 nm, mieux de 0,1 à 50 nm, selon sa nature. Une épaisseur inférieure à 0,1 nm ne permet généralement pas d'obtenir une conductivité électrique suffisante, alors qu'une épaisseur supérieure à 150 nm ne permet généralement pas d'obtenir les caractéristiques de transparence et de faible absorption requises.

La couche électriquement conductrice est de préférence fabriquée à partir d'un matériau électriquement conducteur et hautement transparent. Dans ce cas, son épaisseur varie de préférence de 0,1 à 30 nm, mieux de 1 à 20 nm et encore mieux de 2 à 15 nm. La couche électriquement conductrice comprend de préférence un oxyde métallique choisi parmi les oxydes d'indium, d'étain, de zinc et leurs mélanges. L'oxyde d'étain-indium ($In_2O_3$:Sn, oxyde d'indium dopé à l'étain) et l'oxyde d'indium (InsOs), ainsi que l'oxyde d'étain $SnO_2$ sont préférés. Selon un mode de réalisation optimal, la couche électriquement conductrice et optiquement transparente est une couche d'oxyde d'étain-indium, notée

couche d'ITO.

Généralement, la couche électriquement conductrice contribue à l'obtention de propriétés anti-réfléchissantes et constitue une couche de haut indice de réfraction dans le revêtement interférentiel. C'est le cas de couches fabriquées à partir d'un matériau électriquement conducteur et hautement transparent telles que les couches d'ITO.

La couche électriquement conductrice peut également être une couche d'un métal noble (Ag, Au, Pt etc.) de très faible épaisseur, typiquement de moins de 1 nm d'épaisseur, mieux de moins de 0,5 nm.

Les différentes couches du revêtement interférentiel (dont fait partie la couche antistatique optionnelle) autres que la couche A sont préférentiellement déposées par dépôt sous vide selon l'une des techniques suivantes : i) par évaporation, éventuellement assistée par faisceau ionique ; ii) par pulvérisation par faisceau d'ion ; iii) par pulvérisation cathodique ; iv) par dépôt chimique en phase vapeur assisté par plasma. Ces différentes techniques sont décrites dans les ouvrages "Thin Film Processes" and "Thin Film Processes II," Vossen & Kern, Ed., Academic Press, 1978 et 1991 respectivement. Une technique particulièrement recommandée est la technique d'évaporation sous vide.

De préférence, le dépôt de chacune des couches du revêtement interférentiel est réalisé par évaporation sous vide.

Les couches A et B du revêtement interférentiel (la couche B étant optionnelle) vont maintenant être décrites. Ce sont des couches de bas indice de réfraction au sens de l'invention, puisque leur indice de réfraction est $\leq$ 1,55. De préférence, selon des modes de réalisation de l'invention, l'indice de réfraction de la couche A est supérieur ou égal à 1,45, mieux supérieur à 1,47, mieux encore supérieur ou égal à 1,48 et idéalement supérieur ou égal à 1,49.

Le dépôt de la couche A est obtenu par dépôt, sous faisceau d'ions, d'espèces activées issues d'au moins un composé C, sous forme gazeuse, contenant dans sa structure au moins un atome de silicium, au moins un atome de carbone, au moins un atome d'hydrogène et, optionnellement au moins un atome d'azote et/ou au moins un atome d'oxygène, le dépôt de la dite couche A s'effectuant en réalisant un bombardement au moyen d'un faisceau d'ions de la couche A au cours de sa formation, en présence d'azote et/ou d'oxygène lorsque le composé A ne contient pas d'azote et/ou d'oxygène.

De préférence, le dépôt est effectué dans une enceinte à vide, comportant un canon à ions dirigé vers les substrats à revêtir, qui émet vers ceux-ci un faisceau d'ions positifs générés dans un plasma au sein du canon à ions. Préférentiellement les ions issus du canon à ions sont des particules constituées d'atomes de gaz dont on a extrait un ou plusieurs électron(s), et formés à partir d'un gaz rare, d'oxygène ou d'un mélange de deux ou plus de ces gaz.

Un précurseur gazeux, le composé C est introduit dans l'enceinte à vide, de préférence en direction du faisceau d'ions et est activé sous l'effet du canon à ions.

Sans vouloir être limité par une quelconque théorie, les inventeurs pensent que le plasma du canon à ions se projette dans une zone située à une certaine distance à l'avant du canon, sans toutefois atteindre les substrats à revêtir et qu'une activation /dissociation du composé précurseur C se produit préférentiellement dans cette zone, et d'une manière générale à proximité du canon à ions et dans une moindre mesure dans le canon à ions.

Cette technique du dépôt utilisant un canon à ions et un précurseur gazeux, parfois désignée par « ion beam deposition » est décrite notamment dans le brevet US5508368.

Selon l'invention, de façon préférentielle, le seul endroit de l'enceinte où un plasma est généré est le canon à ions.

Les ions peuvent faire l'objet, le cas échéant, d'une neutralisation avant la sortie du canon à ions. Dans ce cas, le bombardement sera toujours considéré comme ionique. Le bombardement ionique provoque un réarrangement atomique et une densification dans la couche en cours de dépôt, ce qui permet de la tasser pendant qu'elle est en train d'être formée.

Lors de la mise en oeuvre du procédé selon l'invention, la surface à traiter est préférentiellement bombardée par des ions, d'une densité de courant généralement comprise entre 20 et 1000 $\mu A/cm^2$, préférentiellement entre 30 et 500 $\mu A/cm^2$, mieux entre 30 et 200 $\mu A/cm^2$ sur la surface activée et généralement sous une pression résiduelle dans l'enceinte à vide pouvant varier de $6.10^{-5}$ mbar à $2.10^{-4}$ mbar, préférentiellement de $8.10^{-5}$ mbar à $2.10^{-4}$ mbar. On utilise de préférence un faisceau d'ions argon et/ou oxygène. Lorsqu'un mélange d'argon et d'oxygène est employé, le ratio molaire Ar / $O_2$ est de préférence $\leq$ 1, mieux $\leq$ 0,75 et encore mieux $\leq$ 0,5. Ce ratio peut être contrôlé en ajustant les débits de gaz dans le canon à ions. Le débit d'argon varie de préférence de 0 à 30 sccm. Le débit d'oxygène $O_2$ varie de préférence de 5 à 30 sccm, et est d'autant plus grand que le débit de composé précurseur de la couche A est élevé.

Les ions du faisceau d'ions, préférentiellement issus d'un canon à ions utilisés au cours du dépôt de la couche A ont de préférence une énergie allant de 75 à 150 eV, préférentiellement de 80 à 140 eV, mieux de 90 à 110 eV.

Les espèces activées formées sont typiquement des radicaux ou des ions.

Selon la technique de l'invention, celle-ci se distingue d'un dépôt au moyen d'un plasma (par exemple par PECVD) en ce qu'elle implique un bombardement au moyen d'un faisceau d'ions de la couche A en cours de formation, émis de préférence par un canon à ions.

En plus du bombardement ionique lors du dépôt, il est possible d'effectuer un traitement plasma concomitamment ou non au dépôt sous faisceau d'ions de la couche A.

De préférence, le dépôt de la couche est effectué sans l'assistance d'un plasma au niveau des substrats.

Outre la couche A, d'autres couches du revêtement interférentiel peuvent être déposés sous faisceau d'ions.

L'évaporation des matériaux précurseurs de la couche A, conduite sous vide, peut être réalisée en utilisant une source thermique à effet Joule.

Le matériau précurseur de la couche A comprend au moins un composé C, qui est de nature organique, contenant dans sa structure au moins un atome de silicium et au moins un atome de carbone, au moins un atome d'hydrogène et optionnellement au moins un atome d'azote et/ou au moins un atome d'oxygène.

De préférence, le composé C comprend au moins un atome d'azote et/ou au moins un atome d'oxygène, de préférence au moins un atome d'oxygène.

La concentration de chaque élément chimique dans la couche A (Si, O, C, H) peut être déterminée en utilisant la technique RBS (Rutherford Backscattering Spectrometry), et ERDA (Elastic Recoil Détection Analysis).

Le pourcentage atomique en atomes de carbone dans la couche A varie de préférence de 10 à 25 %, mieux de 15 à 25 %. Le pourcentage atomique en atomes d'hydrogène dans la couche A varie de préférence de 10 à 40 %, mieux de 10 à 20 %. Le pourcentage atomique en atomes de silicium dans la couche A varie de préférence de 5 à 30 %, mieux de 15 à 25 %. Le pourcentage atomique en atomes d'oxygène dans la couche A varie de préférence de 20 à 60 %, mieux de 35 à 45 %.

Des exemples non-limitatifs de composés organiques précurseurs de la couche A, cycliques ou non cycliques, sont les composés suivants : l'octaméthylcyclotétrasiloxane (OMCTS), le décaméthylcyclopentasiloxane, le dodécaméthylcyclohexasiloxane, l'hexaméthyl cyclotrisiloxane, l'hexaméthyldisiloxane (HMDSO), l'octaméthyltrisiloxane, le décaméthyltétrasiloxane, le tétraéthoxysilane, le vinyltriméthylsilane, l'hexaméthyldisilazane, l'hexaméthyldisilane, l'hexaméthylcyclotrisilazane, le vinylméthyldiéthoxysilane, le divinyltétraméthyldisiloxane, le tétraméthyldisiloxane., un tétraalkylsilane tel que le tétraméthyl silane

De préférence, le composé précurseur de la couche A comporte au moins un atome de silicium porteur d'au moins un groupe alkyle, de préférence en C1-C4, mieux deux groupes alkyle identiques ou différents, de préférence en C1-C4, par exemple le groupe méthyle.

Les composés précurseurs de la couche A préférés comportent un groupe Si-O-Si, mieux, un groupe :

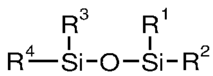

où $R^1$ à $R^4$ désignent indépendamment des groupes alkyle, de préférence en C1-C4, par exemple le groupe méthyle.

De préférence, le ou les atomes de silicium du composé précurseur de la couche A ne comportent aucun groupe hydrolysable. Des exemples non limitatifs de groupes hydrolysables sont les groupes chloro, bromo, alcoxy, acyloxy. Les groupes comportant un chaînon Si-O-Si ne sont pas considérés comme étant des "groupes hydrolysables" au sens de l'invention.

Le ou les atomes de silicium du composé précurseur de la couche A sont de préférence uniquement liés à des groupes alkyle et/ou des groupes comportant un chaînon -O-Si ou -NH-Si de façon à former un groupe Si-O-Si ou Si-NH-Si.

Les composés précurseurs de la couche A préférés sont l'OMCTS et le HMDSO. Le composé précurseur de la couche A est de préférence introduit dans l'enceinte à vide dans laquelle est réalisée la préparation des articles selon l'invention sous forme gazeuse, en contrôlant son débit. Ceci signifie qu'il n'est de préférence pas vaporisé à l'intérieur de l'enceinte à vide. L'alimentation en composé précurseur de la couche A se situe à une distance de la sortie du canon à ions variant de préférence de 30 à 50 cm.

De préférence, la couche A ne comprend pas de composé fluoré. Selon l'invention, elle n'est pas formée à partir de composés précurseurs inorganiques (minéraux), en particulier, elle n'est pas formée à partir de précurseurs de nature oxyde métallique. Elle se distingue donc particulièrement des couches "hybrides" décrites dans la demande US 6,919,134. De préférence, la couche A ne contient pas une phase distincte d'oxydes métalliques, mieux ne contient pas de composés inorganiques. Dans la présente demande, les oxydes de métalloïdes sont considérés comme étant des oxydes métalliques.

Le procédé permettant de former le revêtement interférentiel selon l'invention est donc beaucoup plus simple et moins coûteux que les procédés de co-évaporation d'un composé organique et d'un composé inorganique, comme par exemple celui décrit dans la demande US 6,919,134. En pratique, les procédés de co-évaporation sont très difficiles à mettre en oeuvre, et difficiles à contrôler en raison de problèmes de reproductibilité. Les quantités respectives de composés organiques et inorganiques présents dans la couche déposée varient en effet beaucoup d'une manipulation à l'autre.

La couche A étant formée par dépôt sous vide, elle ne comprend pas d'hydrolysat de silane et se distingue donc des revêtements sol-gel obtenus par voie liquide.

La couche externe du revêtement interférentiel est la couche du revêtement interférentiel la plus éloignée du

substrat dans l'ordre d'empilement. Ladite couche A constitue la couche directement en contact avec la couche externe du revêtement interférentiel, cette couche externe du revêtement interférentiel étant une couche B ayant un indice de réfraction inférieur ou égal à 1,55. Dans ce second cas, qui constitue le mode de réalisation préféré, la couche A constitue l'avant dernière couche du revêtement interférentiel dans l'ordre d'empilement.

De préférence, la couche B contient au moins 50 % en masse de silice, par rapport à la masse totale de la couche B, mieux 75 % ou plus et encore mieux 90 % ou plus, idéalement 100 %. Selon un mode de réalisation préféré, la couche B constitue une couche à base de silice. Elle est de préférence déposée par évaporation sous vide.

La couche B est déposée de préférence sans traitement par des espèces activées, en particulier sans assistance ionique.

La couche A possède de préférence une épaisseur allant de 20 à 150 nm, mieux de 25 à 120 nm. La couche A constitue la couche directement en contact avec la couche externe B du revêtement interférentiel et a préférentiellement une épaisseur allant de 20 à 100 nm, mieux de 25 à 90 nm.

La couche B, lorsqu'elle est présente, possède de préférence une épaisseur allant de 2 à 60 nm, mieux de 5 à 50 nm. De préférence, lorsque la couche B est présente, la somme des épaisseurs des couches A et B, varie de 20 à 150 nm, mieux de 25 à 120 nm, et encore mieux de 60 à 100 nm.

De préférence, toutes les couches de bas indice de réfraction du revêtement interférentiel selon l'invention sont de nature inorganique à l'exception de la couche A (c'est à dire que les autres couches de bas indice de réfraction du revêtement interférentiel ne contiennent de préférence pas de composé organique).

De préférence, toutes les couches du revêtement interférentiel selon l'invention sont de nature inorganique, à l'exception de la couche A, ce qui signifie que la couche A constitue de préférence la seule couche de nature organique du revêtement interférentiel de l'invention (les autres couches du revêtement interférentiel ne contenant de préférence pas de composé organique).

Une autre propriété à prendre en compte lors de la conception d'un revêtement interférentiel sont les contraintes mécaniques. La contrainte de la couche A est nulle ou négative. Dans ce dernier cas, la couche se trouve en compression. Cette contrainte en compression varie de préférence de 0 à -500 MPa, mieux de -20 à -500 MPa, encore mieux de - 50 à - 500 MPa. La contrainte en compression optimale varie de - 150 à - 400 MPa et mieux de - 200 à - 400 MPa. Elle est mesurée à la température de 20°C et sous 50 % d'humidité relative de la façon décrite ci-dessous. Ce sont les conditions de dépôt de l'invention qui permettent de parvenir à cette contrainte.

Le principe de la mesure de contraintes est basé sur le suivi de la déformation d'un substrat mince. En connaissant la géométrie et les propriétés mécaniques du substrat, sa déformation et l'épaisseur de la couche déposée, on calcule les contraintes à l'aide de la formule de Stoney. La contrainte $\sigma_{tot}$ est obtenue en mesurant la courbure de substrats polis pratiquement plan en silicium (100) ou en verre minéral avant et après dépôt d'une monocouche selon l'invention, ou d'un empilement AR complet sur une face du substrat présentant une très légère concavité puis en calculant la valeur de contrainte à partir de la formule de Stoney:

$$\sigma = \frac{1}{6R}\frac{E_S\, d_S^2}{(1-\nu_S)d_f} \qquad (1)$$

dans laquelle $\frac{E_S}{(1-\nu_S)}$ est le module élastique biaxial du substrat, $d_s$ est l'épaisseur du substrat (m), $d_f$ est l'épaisseur du film (m), $E_s$ est le module d'Young du substrat (Pa), $v_s$ est le coefficient de Poisson du substrat, et

$$R = \frac{R_1 R_2}{R_1 - R_2} \qquad (2)$$

dans laquelle $R^1$ est le rayon de courbure mesuré du substrat avant dépôt,
$R_2$ est le rayon de courbure mesuré du substrat revêtu du film après dépôt.

La courbure est mesurée au moyen d'un appareil FLX 2900 (Flexus) de Tencor. Un laser de Class IIIa de puissance 4 milliwatts (mW) à 670 nm est utilisé pour la mesure. L'appareil permet la mesure de contraintes internes en fonction du temps ou de la température (température maximum de 900ºC).

Les paramètres suivants sont utilisés pour calculer la contrainte:

Module élastique biaxial du Si: 180 GPa.
Epaisseur du substrat en Si: 300 microns.
Longueur de balayage (Scan): 40 mm.
Epaisseur du film déposé (mesure par ellipsométrie) : 200-500 nm.
Les mesures sont faites à température ambiante à l'air.

Pour déterminer la contrainte d'un revêtement interférentiel, on déposera le revêtement sur un même substrat adapté, et on procède de la même façon.

La contrainte du revêtement interférentiel selon l'invention varie en général de 0 à -400 MPa, de préférence de - 50 à - 300 MPa, mieux de - 80 à - 250 MPa, et encore mieux de - 100 à - 200 MPa.

Les couches A de l'invention possèdent des allongements à la rupture supérieurs à ceux des couches inorganiques, et peuvent donc subir des déformations sans se fissurer. De ce fait, l'article selon l'invention possède une résistance accrue à la courbure, comme cela est démontré dans la partie expérimentale.

La température critique d'un article revêtu selon l'invention est de préférence supérieure ou égale à 80°C, mieux supérieure ou égale à 90°C et encore mieux supérieure ou égale à 100°C. Cette température critique élevée est due à la présence de la couche A dans le revêtement interférentiel, comme démontré dans la partie expérimentale. Sans vouloir donner d'interprétation limitative à l'invention, les inventeurs pensent que, outre la nature de la couche, l'utilisation de couches A, en permettant d'augmenter la contrainte en compression de l'ensemble de l'empilement, améliore la température critique de l'article.

Dans la présente demande, la température critique d'un article ou d'un revêtement est définie comme étant celle à partir de laquelle on observe l'apparition de craquelures dans l'empilement présent à la surface du substrat, ce qui traduit une dégradation du revêtement interférentiel.

Grâce à ses propriétés thermomécaniques améliorées, le revêtement interférentiel de l'invention peut notamment être appliqué sur une seule face d'une lentille semi-finie, généralement sa face avant, l'autre face de cette lentille devant encore être usinée et traitée. Le revêtement interférentiel de la face avant ne sera pas dégradé par l'accroissement de température générée par les traitements que subira la face arrière lors du durcissement des revêtements qui auront été déposés sur cette face arrière ou toute autre action susceptible d'augmenter la température de la lentille.

Selon un mode de réalisation préféré, le revêtement interférentiel de l'invention comprend, dans l'ordre de dépôt sur la surface du substrat éventuellement revêtu, une couche de $ZrO_2$, généralement de 10 à 40 nm d'épaisseur et préférentiellement de 15 à 35 nm, une couche de $SiO_2$, généralement de 10 à 40 nm d'épaisseur et préférentiellement de 15 à 35 nm, une couche de $ZrO_2$ ou de $TiO_2$, généralement de 40 à 150 nm d'épaisseur, préférentiellement de 50 à 120 nm, une couche d'ITO, généralement de 1 à 15 nm d'épaisseur et préférentiellement de 2 à 10 nm, et soit une couche A selon l'invention, généralement de 50 à 150 nm d'épaisseur et préférentiellement de 60 à 100 nm, soit une couche A selon l'invention revêtue d'une couche B selon l'invention (dans ce second cas, la somme des épaisseurs des couches A et B va généralement de 50 à 150 nm et préférentiellement de 60 à 100 nm).

De préférence, le facteur moyen de réflexion dans le domaine visible (400-700 nm) d'un article revêtu d'un revêtement interférentiel selon l'invention, noté $R_m$, est inférieur à 2,5 % par face, mieux inférieur à 2 % par face et encore mieux inférieur à 1 % par face de l'article. Dans un mode de réalisation optimal, l'article comprend un substrat dont les deux surfaces principales sont revêtues d'un revêtement interférentiel selon l'invention et présente une valeur de $R_m$ totale (cumul de réflexion due aux deux faces) inférieure à 1%. Les moyens pour parvenir à de telles valeurs de $R_m$ sont connus de l'homme du métier.

Le facteur de réflexion lumineux $R_v$ d'un revêtement interférentiel selon l'invention est inférieur à 2,5 % par face, de préférence inférieur à 2 % par face, mieux inférieur à 1 % par face de l'article, mieux $\leq$ 0,75 %, mieux encore $\leq$ 0,5 %.

Dans la présente demande, le "facteur moyen de réflexion" $R_m$ (moyenne de la réflexion spectrale sur l'ensemble du spectre visible entre 400 et 700 nm) et le facteur de réflexion lumineux $R_v$ sont tels que définis dans la norme ISO 13666:1998, et mesurés conformément à la norme ISO 8980-4.

Les coefficients colorimétriques de l'article de l'invention dans le système colorimétrique CIE L*a*b* sont calculés entre 380 et 780 nm en tenant compte de l'illuminant D 65 et de l'observateur (angle d'incidence : 10°). Il est possible de préparer des revêtements interférentiels sans limitation quant à leur angle de teinte. Cependant, l'angle de teinte h varie de préférence de 120 à 150°, ce qui produit un revêtement ayant une réflexion résiduelle de couleur verte, et la chroma C* est de préférence inférieure à 15, mieux inférieure à 10.

Les propriétés optiques des articles de l'invention sont stables dans le temps. De préférence, leur chroma C* ne varie pas de plus de1, mieux de plus de 0,5 sur une période de 3 mois après leur préparation, c'est-à-dire au moment de leur sortie de l'enceinte.

Dans certaines applications, il est préférable que la surface principale du substrat soit revêtue d'un ou plusieurs revêtements fonctionnels préalablement au dépôt du revêtement comportant à sa surface des groupes silanols. Ces revêtements fonctionnels classiquement utilisés en optique peuvent être, sans limitation, une couche de primaire améliorant la résistance au choc et/ou l'adhésion des couches ultérieures dans le produit final, un revêtement anti-abrasion et/ou anti-rayures, un revêtement polarisé, un revêtement photochrome ou un revêtement coloré, en particulier une couche de primaire revêtue d'une couche anti-abrasion et/ou anti-rayures. Ces deux derniers revêtements sont décrits plus en détail dans les demandes WO 2008/015364 et WO 2010/109154.

L'article selon l'invention peut également comporter des revêtements formés sur le revêtement interférentiel, capables de modifier ses propriétés de surface, tels qu'un revêtement hydrophobe et/ou oléophobe (top coat antisalissure) ou un revêtement antibuée. Ces revêtements sont de préférence déposés sur la couche externe du revêtement interférentiel. Leur épaisseur est en général inférieure ou égale à 10 nm, de préférence de 1 à 10 nm, mieux de 1 à 5 nm. Ils sont respectivement décrits dans les demandes WO 2009/047426 et WO 2011/080472.

Le revêtement hydrophobe et/ou oléophobe est de préférence un revêtement de type fluorosilane ou fluorosilazane. Il peut être obtenu par dépôt d'un fluorosilane ou fluorosilazane précurseur, comprenant de préférence au moins deux groupes hydrolysables par molécule. Les fluorosilanes précurseurs contiennent préférentiellement des groupements fluoropolyéthers et mieux des groupements perfluoropolyéthers.

De préférence, le revêtement externe hydrophobe et/ou oléophobe a une énergie de surface égale ou inférieure à 14 $mJ/m^2$, de préférence égale ou inférieure à 13 $mJ/m^2$, mieux égale ou inférieure à 12 $mJ/m^2$. L'énergie de surface est calculée selon la méthode Owens-Wendt décrite dans la référence : « Estimation of the surface force energy of polymers » Owens D. K., Wendt R. G. (1969), J. Appl. Polym. Sci., 13, 1741-1747.

Des composés utilisables pour obtenir de tels revêtements sont décrits dans les brevets JP2005187936 et US6183872.

Des compositions commerciales permettant de préparer des revêtements hydrophobes et/ou oléophobes sont la composition KY130® de la société Shinetsu ou la composition OPTOOL DSX®, commercialisée par DAIKIN INDUSTRIES.

Typiquement, un article selon l'invention comprend un substrat successivement revêtu d'une couche de primaire d'adhésion et/ou antichoc, d'un revêtement anti-abrasion et/ou anti-rayure, d'un revêtement interférentiel selon l'invention, optionnellement antistatique, et d'un revêtement hydrophobe et/ou oléophobe.

L'invention est illustrée, de façon non limitative, par les exemples suivants. Sauf indication contraire, les indices de réfraction sont donnés pour une longueur d'onde de 630 nm et T = 20-25°C.

EXEMPLES

1. Procédures générales

Les articles employés dans les exemples comprennent un substrat de lentille ORMA® ESSILOR de 65 mm de diamètre, de puissance -2,00 dioptries et d'épaisseur 1,2 mm, revêtu sur sa face concave du revêtement de primaire antichoc et du revêtement anti-abrasion et anti-rayures (hard coat) divulgués dans la partie expérimentale de la demande WO 2010/109154, d'un revêtement antireflet et du revêtement antisalissure divulgué dans la partie expérimentale de la demande WO 2010/109154.

Les couches du revêtement antireflet ont été déposées sans chauffage des substrats par évaporation sous vide, éventuellement, lorsque précisé, assistée par faisceau d'ions oxygène et éventuellement argon pendant le dépôt (source d'évaporation : canon à électrons).

Le bâti de dépôt sous vide est une machine Leybold LAB 1100 + équipée d'un canon à électrons pour l'évaporation des matériaux précurseurs, d'un évaporateur thermique, d'un canon à ions KRI EH 1000 F (de la société Kaufman & Robinson Inc.) pour la phase préliminaire de préparation de la surface du substrat par des ions argon (IPC), ainsi que pour le dépôts de la couche A ou de couches sous assistance ionique (IAD), et d'un système d'introduction de liquide, utilisé lorsque le composé précurseur de la couche A est un liquide dans les conditions normales de température et de pression (cas de l'OMCTS). Ce système comprend un réservoir pour le composé précurseur liquide de la couche A, un débitmètre liquide et un vaporiseur qui se trouve dans la machine, et qui est porté à une température de 80-200°C lors de son utilisation, selon le débit du précurseur gazeux, qui varie de préférence de 0,1 à 0,8 g/min (la température est de 180°C pour un débit de 0,3 g/min). La vapeur de précurseur sort d'un tuyau en cuivre à l'intérieur de la machine, à une distance d'environ 50 cm du canon à ions. Un débit d'oxygène est introduit à l'intérieur du canon à ions.

Les couches A selon l'invention sont formées par évaporation sous bombardement ionique d'octaméthylcyclotétrasiloxane, fourni par la société ABCR.

Les couches B selon l'invention, lorsqu'elles sont présentes, sont formées par évaporation de silice fournie par la société Optron, Inc.

L'épaisseur des couches déposées a été contrôlée en temps réel au moyen d'une microbalance à quartz. Sauf indication contraire, les épaisseurs mentionnées sont des épaisseurs physiques. Plusieurs échantillons de chaque verre ont été préparés.

2. Modes opératoires

Le procédé de préparation des articles d'optique selon l'invention comprend l'introduction du substrat revêtu du revêtement de primaire et du revêtement anti-abrasion définis ci-dessus dans l'enceinte de dépôt sous vide, une étape de pompage primaire, puis de pompage secondaire pendant 400 s permettant l'obtention d'un vide secondaire (~2. $10^{-5}$ mbar, pression lue sur une jauge Bayard-Alpert), une étape de préchauffage du vaporiseur à la température choisie (~ 5 min), une étape d'activation de la surface du substrat par un faisceau d'ions argon (IPC : 1 minute, 100 V, 1 A, le canon à ions étant arrêté à la fin de cette étape), puis le dépôt par évaporation des couches inorganiques suivantes à l'aide du canon à électrons jusqu'à l'obtention de l'épaisseur désirée pour chaque couche :

- une couche de $ZrO_2$ de 20 nm d'épaisseur,
- une couche de $SiO_2$ de 25 nm d'épaisseur,
- une couche de $ZrO_2$ de 80 nm d'épaisseur,
- une couche électriquement conductrice d'ITO déposée sous assistance d'ions oxygène de 6 nm d'épaisseur,

Le dépôt de la couche A sur la couche d'ITO est ensuite réalisé de la façon suivante.
Le canon à ions est alors démarré avec de l'argon, de l'oxygène est ajouté dans le canon à ions, avec un débit programmé, le courant d'anode souhaité est programmé (3 A) et le composé OMCTS est introduit dans l'enceinte (débit liquide programmé à 0,3 g/min). L'alimentation en OMCTS est arrêtée une fois l'épaisseur souhaitée obtenue, puis le canon à ions est éteint.
Dans les exemples 1 et 3 à 7 (mode de réalisation 1), une couche de revêtement antisalissure (top coat) (Optool DSX™ de la société Daikin) de l'ordre de 5 nm est déposée directement sur une couche A de 80 nm d'épaisseur, qui constitue la couche externe du revêtement antireflet.
Dans les exemples 2 et 8 à 13 (mode de réalisation 2), une couche de silice de 5-40 nm d'épaisseur (couche B) est déposée sur une couche A de 40-75 nm d'épaisseur (de la même façon que la 1ère couche de silice du revêtement antireflet déjà déposée, sans assistance ionique), la somme des épaisseurs des couches A et B étant égale à 80 nm, puis une couche de revêtement antisalissure (top coat) (Optool DSX™ de la société Daikin) de l'ordre de 5 nm est déposée sur cette couche de silice.
Enfin, une étape de ventilation est réalisée.
L'exemple comparatif 1 diffère des empilements des modes de réalisation 1 et 2 décrits ci-dessus en ce que la couche A ou l'ensemble couche A + couche B est remplacé par une couche de silice de même épaisseur (80 nm).
L'exemple comparatif 2 diffère des exemples 1 et 3 à 7 en ce que la couche externe du revêtement antireflet a été formée par co-évaporation d'OMCTS (débit liquide programmé à 0,1 g/min) et de silice (à puissance fixe, canon à électrons opéré avec un courant d'émission de 60 mA sous assistance ionique. Cette couche externe du revêtement antireflet, qui est obtenue à partir d'une substance organique et une substance inorganique, est donc préparée conformément à l'enseignement du brevet US 6,919,134.

3. Caractérisations

Les mesures colorimétriques de l'angle de teinte h* et de la Chroma C* ont été effectuées avec un spectrophotomètre Zeiss calculées dans le système CIE (L*, a*, b*).
La résistance à l'abrasion a été évaluée par détermination des valeurs BAYER ASTM (Bayer sable) sur les substrats revêtus du revêtement antireflet et du revêtement anti-salissure selon les méthodes décrites dans la demande WO 2008/001011 (norme ASTM F 735.81). Plus la valeur obtenue au test BAYER est élevée, plus la résistance à l'abrasion est élevée. Ainsi, la valeur de Bayer ASTM (Bayer sable) est qualifiée de bonne lorsqu'elle est supérieure ou égale à 3,4 et inférieure à 4,5 et d'excellente pour des valeurs de 4,5 et plus.
Le test qualitatif connu sous le nom de test "n×10 coups" permet d'évaluer les propriétés d'adhésion d'un film déposé sur un substrat, notamment l'adhésion d'un revêtement antireflet à un substrat de lentille ophtalmique. Il a été réalisé sur la face concave des lentilles en suivant la procédure décrite dans la demande internationale WO 2010/109154.
La température critique de l'article est mesurée de la façon indiquée dans la demande WO 2008/001011. Elle est mesurée une semaine après la préparation de cet article.
La résistance à la corrosion est évaluée à l'aide d'un test d'immersion dans de l'eau salée (200g/l) à 50 °C. Le verre est immergé pendant 20 min, et ensuite, après essuyage, on évalue l'aspect visuel du revêtement. Notamment, on prend en compte des défauts éventuels de délamination, ainsi que des changements de couleur de l'antireflet. La note 1 correspond à un léger changement de couleur, et la note 2 signifie qu'aucun changement n'est détectable.
Le test de résistance à la courbure permet d'évaluer la capacité d'un article possédant une courbure à subir une déformation mécanique.
Le test s'effectue sur un verre initialement sphérique qui a été débordé à la forme d'un rectangle de dimension

50x25 mm.

Le mode de sollicitation de ce test est représentatif de la sollicitation chez l'opticien pour le montage du verre, c'est-à-dire la "compression" du verre pour l'insérer dans une monture métallique. Ce test utilise un banc Instron pour appliquer au verre une déformation de façon contrôlée, des diodes électroluminescentes (LED) pour illuminer le verre, une caméra et un logiciel d'analyse d'images. Le verre revêtu est comprimé par le banc Instron, par application de forces exercées suivant l'axe de la longueur principale du verre débordé jusqu'à l'apparition de fissures perpendiculaires au sens de déplacement dans le revêtement antireflet, détectées par analyse de l'image en transmission. Le résultat du test est la déformation critique D en mm que peut subir le verre avant l'apparition de fissures, représenté sur la figure 1. Ce test est réalisé un mois après la préparation des verres. Plus la valeur de la déformation est élevée, meilleure est la résistance à la déformation mécanique appliquée.

D'une manière générale, les revêtements interférentiels selon l'invention ont des valeurs de déformation critique variant de 0, 7 à 1, 2 mm, mieux de 0,8 mm à 1, 2 mm et encore mieux de 0, 9 à 1, 2 mm.

## 4. Résultats

Le tableau 1 ci-dessous présente les performances optiques de différents revêtements antireflet (l'instant t désignant le moment où la préparation de l'article a été achevée). L'exemple 1 n'est pas un exemple selon l'invention.

**Tableau 1**

| Exemple | Epaisseur couche A (nm) | Epaisseur couche B (nm) | Débit Ar/O2 (canon à ions) (sccm) | Exemple | Angle de teinte h (°) | Chroma C* | $R_m$ (%) | $R_v$ (%) |
|---|---|---|---|---|---|---|---|---|
| 1 | 85 | 0 | 0/20 | 1 (t + 1h) | 131 | 4,6 | 1,14 | 1,00 |
| | | | | 1 (t + 1 mois) | 125 | 4,8 | 1,04 | 0,91 |
| | | | | Variation | -6 | + 0,2 | -0,1 | -0,09 |
| 2 | 45 | 45 | 5/20 | 2(t + 1h) | 151 | 7.7 | 0.75 | 0.73 |
| | | | | 2 (t+ 1 mois) | 146 | 7.3 | 0.70 | 0.67 |
| | | | | Variation | -5 | -0,4 | -0.05 | -0.06 |
| Comp 1 | 0 | 80 | ---- | Comp 1 (t + 1h) | 128 | 7.6 | 0.74 | 0.71 |
| | | | | Comp 1 (t+1 mois) | 123 | 5.3 | 0.67 | 0.58 |
| | | | | Variation | -5 | -2,3 | -0.07 | -0.13 |
| Instant t = moment où la préparation de l'article est achevée, à sa sortie de l'enceinte de dépôt. | | | | | | | | |

Les articles selon l'invention présentent une meilleure stabilité optique, en particulier la chroma est beaucoup plus stable dans le temps. L'article de l'exemple comparatif 1 subit une diminution de chroma au cours du temps supérieure à 2, ce qui est inacceptable.

Le tableau 2 ci-dessous indique les épaisseurs des couches A et B pour chacun des exemples 3 à 13, les conditions de dépôt de la couche A (débits respectifs d'argon et d'Os dans le canon à ions) ainsi que les résultats des tests auxquels ont été soumis les articles préparés. Les exemples 3-7 ne sont pas des exemples selon l'invention.

**Tableau 2**

| Exemple | Epaisseur couche A (nm) | Epaisseur couche B ($SiO_2$) (nm) | Débit Ar / $O_2$ (canon à ions) (sccm) | Indice de réfraction couche A à 630 nm | Bayer sable | Température critique (°C) | Test de résistance à la courbure, déformation en mm avant craquelure | Résistance à la corrosion |
|---|---|---|---|---|---|---|---|---|
| 3 | 80 | 0 | 0/14 | 1,54 | 5,6 | 110 | 0,85 | 1 |
| 4 | 80 | 0 | 0/20 | 1,53 | 6,9 | 103 | 0,95 | 1 à 2 |
| 5 | 80 | 0 | 0/25 | 1,50 | 6,5 | 83 | 0,72 | 1 |
| 6 | 80 | 0 | 5/20 | | 5,6 | 100 | | 1 |
| 7 | 80 | 0 | 10/20 | | 5,0 | 85 | | 1 à 2 |
| 8 | 75 | 5 | 0/20 | | 4,7 | 100 | 0,9 | 1 |
| 9 | 40 | 40 | 0/20 | | 4,8 | 88 | 0,94 | |
| 10 | 55 | 25 | 0/20 | | 5,4 | 95 | | 1 à 2 |
| 11 | 25 | 55 | 0/20 | | 4,3 | 80 | | 1 |
| 12 | 55 | 25 | 0/25 | | 4,7 | 80 | | 1 |
| 13 | 40 | 40 | 0/25 | | 4,5 | 75 | | 1 |
| Comp 1 | 0 | 80 | - | | 4,6 | 60-70 | 0,5 à 0,6 | 1 |
| Comp 2 | 80 (co-évaporation) | | 0/20 | 1,48 | 6,0 | 70 | 0,65 | Délamination partielle |

La couche A de l'exemple 4 possède les teneurs atomiques suivantes : 22 % de silicium, 40,8 % d'oxygène, 20,5 % de carbone et 16,7 % d'hydrogène. La couche externe du revêtement antireflet de l'exemple comparatif 2, obtenue par co-évaporation de silice et d'OMCTS, possède les teneurs atomiques suivantes : 28,2 % de silicium, 61,5 % d'oxygène, 3 % de carbone et 10,3 % d'hydrogène.

Les articles selon l'invention présentent une température critique nettement améliorée et une amélioration significative de la déformation en courbure que peut subir l'article avant l'apparition de fissures. Ces améliorations sont directement attribuables à la présence d'une couche A dans l'empilement antireflet, comme le montre la comparaison des exemples selon l'invention à l'exemple comparatif 1.

La résistance à la corrosion est généralement améliorée par la présence d'une couche A.

Les lentilles de tous les exemples et exemples comparatifs passent avec succès le test communément appelé "n×10 coups". Ceci montre que les différentes couches du revêtement antireflet selon l'invention présentent de bonnes propriétés d'adhésion, en particulier à l'interface avec le substrat.

Les inventeurs ont constaté que le mode de réalisation 2 (exemples 8-13) permet de parvenir à un article possédant un revêtement antisalissure nettement plus performant que celui du mode de réalisation 1 (exemples 3-7), ce qui peut être constaté en réalisant le test d'encre ("Magic Ink") décrit dans la demande WO 2004/111691, tout en conservant de bonnes propriétés mécaniques.

Il a également été remarqué que l'utilisation d'un ajout d'ions argon en plus des ions oxygène dans le faisceau d'ions améliorait l'aspect cosmétique des verres, en prévenant l'apparition au cours du temps de défauts de surface, visibles notamment à la lampe à arc.

## Revendications

1. Article comprenant un substrat ayant au moins une surface principale revêtue d'un revêtement interférentiel multicouche, ledit revêtement comprenant une couche A ayant un indice de réfraction inférieur ou égal à 1,55, **caractérisé en ce que** :

   - ladite couche A constitue une couche intermédiaire, directement en contact avec la couche externe du revêtement interférentiel, cette couche externe du revêtement interférentiel étant une couche B ayant un indice de réfraction inférieur ou égal à 1,55,
   - et ladite couche A a été obtenue par dépôt, sous faisceau d'ions, d'espèces activées issues d'au moins un composé C, sous forme gazeuse contenant dans sa structure au moins un atome de silicium, au moins un atome de carbone, au moins un atome d'hydrogène et, optionnellement au moins un atome d'azote et/ou au moins un atome d'oxygène, le dépôt de ladite couche A s'effectuant en réalisant un bombardement au moyen d'un faisceau d'ions de la couche A au cours de sa formation, et en présence d'azote et/ou d'oxygène lorsque le composé C ne contient pas d'azote et/ou d'oxygène,
   - ladite couche A n'est pas formée à partir de composés précurseurs inorganiques,
   - un revêtement hydrophobe et/ou oléophobe est optionnellement formé sur la couche externe du revêtement interférentiel.

2. Article selon la revendication 1, **caractérisé en ce que** le faisceau d'ions est émis par un canon à ions.

3. Article selon l'une quelconque des revendications précédentes, **caractérisé en ce que** le composé C comporte au moins un atome de silicium porteur d'au moins un groupe alkyle.

4. Article selon l'une quelconque des revendications précédentes, **caractérisé en ce que** le composé C comporte au moins un groupe de formule :

   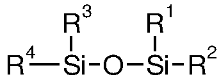

   où $R^1$ à $R^4$ désignent indépendamment des groupes alkyle.

5. Article selon l'une quelconque des revendications 1 à 4, **caractérisé en ce que** le composé C est choisi parmi l'octaméthylcyclotétrasiloxane et l'hexaméthyldisiloxane.

6. Article selon l'une quelconque des revendications précédentes, **caractérisé en ce que** le ou les atomes de silicium

du composé C ne comportent aucun groupe hydrolysable.

**7.** Article selon l'une quelconque des revendications précédentes, **caractérisé en ce que** la couche A ne contient pas une phase distincte d'oxydes métalliques.

**8.** Article selon l'une quelconque des revendications précédentes, **caractérisé en ce que** la couche B comprend au moins 50 % en masse de silice, par rapport à la masse totale de la couche B, mieux 75 % ou plus, encore mieux 90 % ou plus, idéalement 100 %.

**9.** Article selon l'une quelconque des revendications précédentes, **caractérisé en ce que** la couche A a une épaisseur allant de 20 à 150 nm, mieux de 25 à 120 nm.

**10.** Article selon l'une quelconque des revendications précédentes, **caractérisé en ce que** la couche B a une épaisseur allant de 2 à 60 nm, mieux de 5 à 50 nm.

**11.** Article selon l'une quelconque des revendications précédentes, **caractérisé en ce que** le revêtement interférentiel comporte des couches de bas indice de réfraction et que toutes ces couches de bas indice de réfraction sont de nature inorganique à l'exception de la couche A.

**12.** Article selon l'une quelconque des revendications précédentes, **caractérisé en ce que** toutes les couches du revêtement interférentiel sont de nature inorganique, à l'exception de la couche A.

**13.** Article selon l'une quelconque des revendications précédentes, **caractérisé en ce qu'**il est une lentille optique, de préférence une lentille ophtalmique.

**14.** Article selon l'une quelconque des revendications précédentes, **caractérisé en ce que** le revêtement interférentiel est un revêtement antireflet.

**15.** Article selon l'une quelconque des revendications précédentes, **caractérisé en ce que** la contrainte de la couche A varie de 0 à -500 MPa.

**16.** Article selon l'une quelconque des revendications précédentes, **caractérisé en ce que** l'indice de réfraction de la couche A est supérieur ou égal à 1,47, de préférence supérieur ou égal à 1,48.

**17.** Procédé de fabrication d'un article selon l'une quelconque des revendications précédentes, comprenant au moins les étapes suivantes :

- fournir un article comprenant un substrat ayant au moins une surface principale,
- déposer sur ladite surface principale du substrat un revêtement interférentiel multicouche, ledit revêtement comprenant une couche A ayant un indice de réfraction inférieur ou égal à 1,55, qui constitue une couche intermédiaire, directement en contact avec la couche externe du revêtement interférentiel, cette couche externe du revêtement interférentiel étant une couche B ayant un indice de réfraction inférieur ou égal à 1,55,
- optionnellement, former un revêtement hydrophobe et/ou oléophobe sur la couche externe du revêtement interférentiel,
- récupérer un article comprenant un substrat ayant une surface principale revêtue dudit revêtement interférentiel qui comporte ladite couche A, **caractérisé en ce que** ladite couche A a été obtenue par dépôt, sous faisceau d'ions, d'espèces activées issues d'au moins un composé C, sous forme gazeuse contenant dans sa structure au moins un atome de silicium, au moins un atome de carbone, au moins un atome d'hydrogène et, optionnellement au moins un atome d'azote et/ou au moins un atome d'oxygène, le dépôt de ladite couche A s'effectuant en réalisant un bombardement au moyen d'un faisceau d'ions de la couche A au cours de sa formation, et en présence d'azote et/ou d'oxygène lorsque le composé C ne contient pas d'azote et/ou d'oxygène, et **en ce que** la couche A n'est pas formée à partir de composés précurseurs inorganiques.

## Patentansprüche

**1.** Artikel, der ein Substrat mit mindestens einer Hauptfläche umfasst, die mit einer mehrlagigen Interferenzbeschichtung beschichtet ist, wobei die Beschichtung eine Schicht A mit einem Brechungsindex kleiner als oder gleich 1,55

umfasst, **dadurch gekennzeichnet, dass**:

- die Schicht A eine Zwischenschicht darstellt, die sich direkt in Kontakt mit der äußeren Schicht der Interferenzbeschichtung befindet, wobei diese äußere Schicht der Interferenzbeschichtung eine Schicht B mit einem Brechungsindex kleiner als oder gleich 1,55 ist,
- und die Schicht A durch eine Abscheidung unter einem Ionenstrahl von aktivierten Spezies erhalten wurde, die von mindestens einer Verbindung C in Gasform stammen, die in ihrer Struktur mindestens ein Siliciumatom, mindestens ein Kohlenstoffatom, mindestens ein Wasserstoffatom und gegebenenfalls mindestens ein Stickstoffatom und/oder mindestens ein Sauerstoffatom enthält, wobei die Abscheidung der Schicht A erfolgt, indem ein Beschuss der Schicht A bei ihrer Bildung und, wenn Verbindung C keinen Stickstoff und/oder Sauerstoff enthält, in Gegenwart von Stickstoff und/oder Sauerstoff mittels eines Ionenstrahls erfolgt,
- die Schicht A nicht aus anorganischen Vorläuferverbindungen gebildet ist,
- gegebenenfalls eine hydrophobe und/oder oleophobe Beschichtung auf der äußeren Schicht der Interferenzbeschichtung gebildet ist.

2. Artikel nach Anspruch 1, **dadurch gekennzeichnet, dass** der Ionenstrahl von einer Ionenkanone abgegeben wird.

3. Artikel nach einem der vorhergehenden Ansprüche, **dadurch gekennzeichnet, dass** Verbindung C mindestens ein Siliciumatom umfasst, das mindestens eine Alkylgruppe trägt.

4. Artikel nach einem der vorhergehenden Ansprüche, **dadurch gekennzeichnet, dass** Verbindung C mindestens eine Gruppe der Formel:

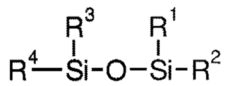

umfasst, wobei $R^1$ bis $R^4$ unabhängig Alkylgruppen bezeichnen.

5. Artikel nach einem der Ansprüche 1 bis 4, **dadurch gekennzeichnet, dass** Verbindung C aus Octamethylcyclotetrasiloxan und Hexamethyldisiloxan ausgewählt ist.

6. Artikel nach einem der vorhergehenden Ansprüche, **dadurch gekennzeichnet, dass** das Siliciumatom oder die Siliciumatome von Verbindung C keine hydrolysierbare Gruppe umfasst bzw. umfassen.

7. Artikel nach einem der vorhergehenden Ansprüche, **dadurch gekennzeichnet, dass** Schicht A keine getrennte Metalloxidphase enthält.

8. Artikel nach einem der vorhergehenden Ansprüche, **dadurch gekennzeichnet, dass** Schicht B mindestens 50 Gew.-%, bezogen auf das Gesamtgewicht von Schicht B, besser 75 Gew.-% oder mehr, noch mehr bevorzugt 90 Gew.- % oder mehr, idealerweise 100 Gew.-%, Siliciumdioxid umfasst.

9. Artikel nach einem der vorhergehenden Ansprüche, **dadurch gekennzeichnet, dass** Schicht A eine Dicke von 20 bis 150 nm, besser von 25 bis 120 nm, aufweist.

10. Artikel nach einem der vorhergehenden Ansprüche, **dadurch gekennzeichnet, dass** Schicht B eine Dicke von 2 bis 60 nm, besser von 5 bis 50 nm, aufweist.

11. Artikel nach einem der vorhergehenden Ansprüche, **dadurch gekennzeichnet, dass** die Interferenzbeschichtung Schichten mit einem niedrigen Brechungsindex umfasst und alle diese Schichten mit einem niedrigen Brechungsindex mit Ausnahme von Schicht A von anorganischer Beschaffenheit sind.

12. Artikel nach einem der vorhergehenden Ansprüche, **dadurch gekennzeichnet, dass** alle Schichten der Interferenzbeschichtung mit Ausnahme von Schicht A von anorganischer Beschaffenheit sind.

13. Artikel nach einem der vorhergehenden Ansprüche, **dadurch gekennzeichnet, dass** es sich dabei um eine optische Linse, vorzugsweise eine ophthalmische Linse, handelt.

**14.** Artikel nach einem der vorhergehenden Ansprüche, **dadurch gekennzeichnet, dass** es sich bei der Interferenzbeschichtung um eine reflexmindernde Beschichtung handelt.

**15.** Artikel nach einem der vorhergehenden Ansprüche, **dadurch gekennzeichnet, dass** die Spannung von Schicht A im Bereich von 0 bis -500 MPa liegt.

**16.** Artikel nach einem der vorhergehenden Ansprüche, **dadurch gekennzeichnet, dass** der Brechungsindex von Schicht A größer als oder gleich 1,47, vorzugsweise größer als oder gleich 1,48, ist.

**17.** Verfahren zur Herstellung eines Artikels nach einem der vorhergehenden Ansprüche, das zumindest die folgenden Schritte umfasst:

- das Bereitstellen eines Artikels, der ein Substrat mit mindestens einer Hauptfläche umfasst,
- das Abscheiden einer mehrlagigen Interferenzbeschichtung auf der Hauptfläche des Substrats, wobei die Beschichtung eine Schicht A mit einem Brechungsindex kleiner als oder gleich 1,55 umfasst, die eine Zwischenschicht darstellt, die sich direkt in Kontakt mit der äußeren Schicht der Interferenzbeschichtung befindet, wobei diese äußere Schicht der Interferenzbeschichtung eine Schicht B mit einem Brechungsindex kleiner als oder gleich 1,55 ist,
- gegebenenfalls das Bilden einer hydrophoben und/oder oleophoben Beschichtung auf der äußeren Schicht der Interferenzbeschichtung,
- das Erhalten eines Artikels, der ein Substrat mit einer Hauptfläche umfasst, die mit der Interferenzbeschichtung beschichtet ist, welche die Schicht A umfasst, **dadurch gekennzeichnet, dass** die Schicht A durch eine Abscheidung unter einem Ionenstrahl von aktivierten Spezies erhalten wurde, die von mindestens einer Verbindung C in Gasform stammen, die in ihrer Struktur mindestens ein Siliciumatom, mindestens ein Kohlenstoffatom, mindestens ein Wasserstoffatom und gegebenenfalls mindestens ein Stickstoffatom und/oder mindestens ein Sauerstoffatom enthält, wobei die Abscheidung der Schicht A erfolgt, indem ein Beschuss der Schicht A bei ihrer Bildung und, wenn Verbindung C keinen Stickstoff und/oder Sauerstoff enthält, in Gegenwart von Stickstoff und/oder Sauerstoff mittels eines Ionenstrahls erfolgt, und dadurch, dass Schicht A nicht aus anorganischen Vorläuferverbindungen gebildet ist.

## Claims

**1.** An article comprising a substrate having at least one main surface coated with a multilayer interference coating, said coating containing a layer A having a refractive index lower than or equal to 1.55, **characterized in that**:

- said layer A is an intermediate layer, making direct contact with the external layer of the interference coating, this external layer of the interference coating being a layer B having a refractive index lower than or equal to 1.55,
- and said layer A was obtained by deposition, under an ion beam, of activated species issued from at least one compound C in gaseous form, containing in its structure at least one silicon atom, at least one carbon atom, at least one hydrogen atom and, optionally, at least one nitrogen atom and/or at least one oxygen atom, the deposition of said layer A being carried out by bombarding by means of an ion beam the layer A while it is being formed, and in the presence of nitrogen and/or oxygen when the compound C does not contain nitrogen and/or oxygen and
- said layer A is not formed from inorganic precursor compounds,
- a hydrophobic and/or oleophobic coating is optionally applied on the external layer of the interferential coating.

**2.** The article as claimed in claim 1, **characterized in that** the ion beam is emitted by an ion gun.

**3.** The article as claimed in any of the preceding claims, **characterized in that** the compound C contains at least one silicon atom bearing at least one alkyl group.

**4.** The article as claimed in any one of the preceding claims, **characterized in that** the compound C contains at least one group of formula:

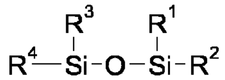

where $R^1$ to $R^4$ independently designate alkyl groups.

5. The article as claimed in any one of claims 1 to 4, **characterized in that** the compound C is chosen from octamethylcyclotetrasiloxane and hexamethyldisiloxane.

6. The article as claimed in any one of the preceding claims, **characterized in that** the silicon atom or atoms of the compound C contain no hydrolysable group.

7. The article as claimed in any one of the preceding claims, **characterized in that** the layer A does not contain a separate metal oxide phase.

8. The article as claimed in any one of the preceding claims, **characterized in that** the layer B contains at least 50 wt% silica relative to the total weight of the layer B, preferably 75 wt% or more, more preferably 90 wt% or more and ideally 100 wt%.

9. The article as claimed in any one of the preceding claims, **characterized in that** the layer A has a thickness ranging from 20 to 150 nm and preferably from 25 to 120 nm.

10. The article as claimed in any one of the preceding claims, **characterized in that** the layer B has a thickness ranging from 2 to 60 nm and preferably from 5 to 50 nm.

11. The article as claimed in any one of the preceding claims, **characterized in that** the interference coating contains low refractive index layers and all these low refractive index layers are inorganic in nature except for the layer A.

12. The article as claimed in any one of the preceding claims, **characterized in that** all the layers of the interference coating are inorganic in nature, except for the layer A.

13. The article as claimed in any one of the preceding claims, **characterized in that** it is an optical lens, preferably an ophthalmic lens.

14. The article as claimed in any one of the preceding claims, **characterized in that** the interference coating is an antireflection coating.

15. The article as claimed in any one of the preceding claims, **characterized in that** the stress in the layer A ranges from 0 to -500 MPa.

16. The article as claimed in any one of the preceding claims, **characterized in that** layer A has a refractive index higher than or equal to 1.47, preferably higher than or equal to 1.48.

17. A process for manufacturing an article according to any one of the preceding claims, comprising at least the following steps:

- providing an article comprising a substrate having at least one main surface,
- depositing, on said main surface of the substrate, a multilayer interference coating, said coating containing a layer A having a refractive index lower than or equal to 1.55, which is an intermediate layer making direct contact with the external layer of the interference coating, this external layer of the interference coating being a layer B having a refractive index lower than or equal to 1.55,
- optionally, forming a hydrophobic and/or oleophobic coating on the external layer of the interferential coating,
- recovering an article comprising a substrate having a main surface coated with said interference coating that contains said layer A, **characterized in that** said layer A was obtained by deposition, under an ion beam, of activated species issued from at least one compound C in gaseous form, containing in its structure at least one silicon atom, at least one carbon atom, at least one hydrogen atom and, optionally, at least one nitrogen atom and/or at least one oxygen atom, the deposition of said layer A being carried out by bombarding by means of an ion beam the layer A while it is being formed, and in the presence of nitrogen and/or oxygen when the compound C does not contain nitrogen and/or oxygen, and **in that** the layer A is not formed from inorganic precursor compounds.

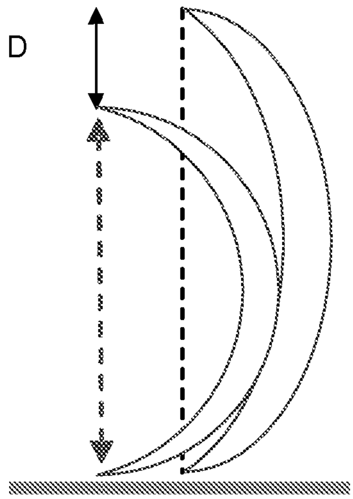


Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6919134 B
- JP 2007078780 A
- JP 5323103 A
- US 2004157061 A
- US 2007059942 A
- WO 2010109154 A
- WO 2008062142 A
- US 5508368 A
- WO 2008015364 A
- WO 2009047426 A
- WO 2011080472 A
- JP 2005187936 B
- US 6183872 B
- WO 2008001011 A
- WO 2004111691 A


### Littérature non-brevet citée dans la description


- Thin Film Processes II. Academic Press, 1978, , 1991
- **OWENS D. K. ; WENDT R. G.** *J. Appl. Polym. Sci.,* 1969, vol. 13, 1741-1747